Europäisches Patentamt

**European Patent Office**

**Office européen des brevets**

(11) Publication number: **0 052 895**
**B1**

# EUROPEAN PATENT SPECIFICATION

(45) Date of publication of patent specification: **01.08.84**

(51) Int. Cl.³: **A 23 B 4/02**

(21) Application number: **81200974.4**

(22) Date of filing: **01.09.81**

(54) **Presalting and rubbing machine for raw hams in general.**

(30) Priority: **05.11.80 IT 4689980**

(43) Date of publication of application:
**02.06.82 Bulletin 82/22**

(45) Publication of the grant of the patent:
**01.08.84 Bulletin 84/31**

(84) Designated Contracting States:
**AT BE CH DE FR GB IT LI LU NL SE**

(56) References cited:
**FR - A - 1 151 486**
**FR - A - 2 358 107**
**US - A - 1 825 205**

(73) Proprietor: **MACCHINE SONCINI ALBERTO S.p.A.**
**1 Via Pezzani**
**I-43013 Langhirano (Parma) (IT)**

(72) Inventor: **Soncini, Alberto**
**1, Via Pezzani**
**I-43013 Langhirano (Parma) (IT)**

(74) Representative: **Corradini, Corrado**
**STUDIO SECCHI & CORRADINI 4, Via Dante**
**Alighieri**
**I-42100 Reggio Emilia (IT)**

Courier Press, Leamington Spa, England.

## Description

This invention relates to a machine for automatically and continuously presalting raw hams intended for seasoning.

Among the operations involved in preparing raw ham for seasoning, it is well known that those relating to the salting of the meat are of considerable importance.

The meat mass receives its required salt content by two basic operations. The first, known as "presalting" comprises rubbing only the ham rind with moist salt, which by partly cutting into the rind initiates the osmotic process of penetration of the salt into the meat.

Said first operation must be limited only to the rind without involving the bare red meat portions which surround the ham joint, known commonly as the bone.

It is still carried out manually, as the attempts to mechanise it have failed because of the difficulty of protecting the "bare" meat from the presalting operation, and of the difficulty in uniformly rubbing meat masses of irregular weight and shape.

The object of the present invention is to provide a machine able to rub moist salt onto the raw ham rind, while protecting its lean part surrounding the joint.

According to the invention this is accomplished while satisfying a further requirement of the presalting operation, namely introducing the moist salt into the thin part close to the knee, known as the "shank", and maintaining it thereat.

The design which attains this object consists of an approximately horizontal tunnel having its base rigid and its other walls deformable, and constituted by a rough heavy mesh arranged to allow the salt to pass and to rub it on to the ham surface, means being provided for feeding the ham through said tunnel with its shank disposed frontwards, and to protect the "bare" portion around the joint from contact with the salt.

Means are also obviously provided for feeding the moist salt by feeding it from a collector disposed downstream of the tunnel to a hopper disposed upstream thereof.

In a modification according to the invention, the deformable wall is constituted by a mesh of round steel rings inserted into each other in alternate directions.

The characteristics and constructional merits of the invention will be more apparent from the detailed description given hereinafter with reference to the figures of the accompanying drawings which illustrate a preferred embodiment of the machine in question by way of example only.

Figure 1 is a longitudinal view of the invention without its outer covering panels, the view being taken in section through the conveyor.

Figure 2 is a partly sectional front view of the preceding figure.

Figure 3 is an enlarged detail of the deformable perforated pocket with which the machine in question is provided.

Figure 4 is a section on the line IV—IV of Figure 3, said section being taken parallel to the ham feed direction along the invention.

Figure 5 is a side view of the loading zone of the machine, to illustrate how the shield-shaped pushers for the hams lie when the hams are absent.

Figure 6 shows one of the lateral rubbing elements of the invention.

Figure 7 is a perspective view of a retainer for housing the ham shanks during transfer.

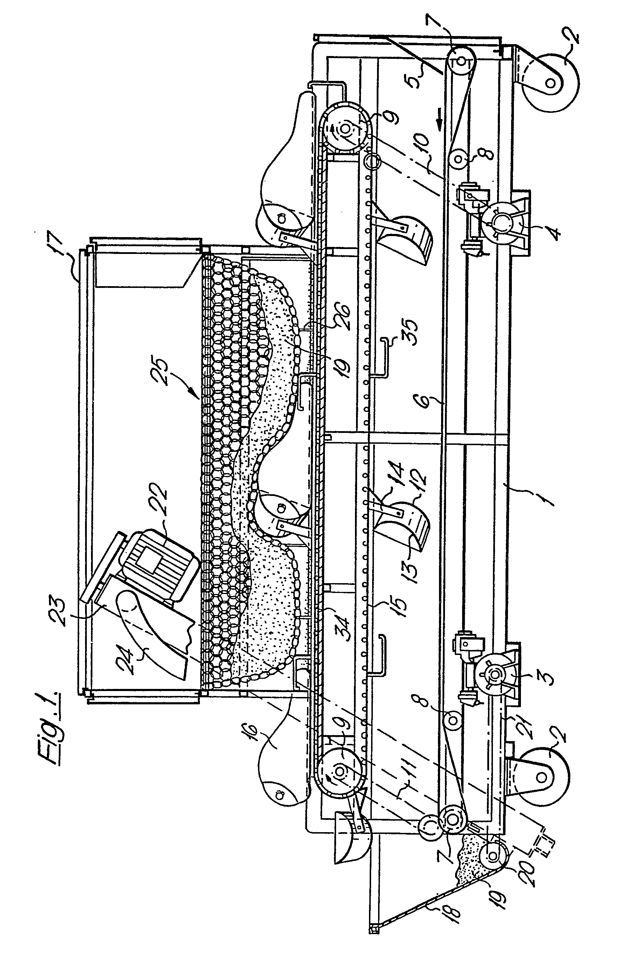

In said figures, and in particular Figure 1, it can be seen that the presalting machine according to the invention comprises a base frame 1 of welded tube, which is fitted lowerly with four wheels for its transfer in its areas of use.

A framework 17 lies substantially above the central half of the upper horizontal face of the frame 1.

On said upper face of the frame 1, this face constituting the working surface of the machine according to the invention, there is disposed a horizontal slide plate 34 provided centrally with a longitudinal slot which in cross-section is in the shape of an inverted T.

The upper rectilinear portion of a slat-type conveyor belt 15 is designed to slide inside and said slot and to be supported therein, and passes over two end cog wheels 9, these latter having horizontal axes disposed transversely to the slide plate 34.

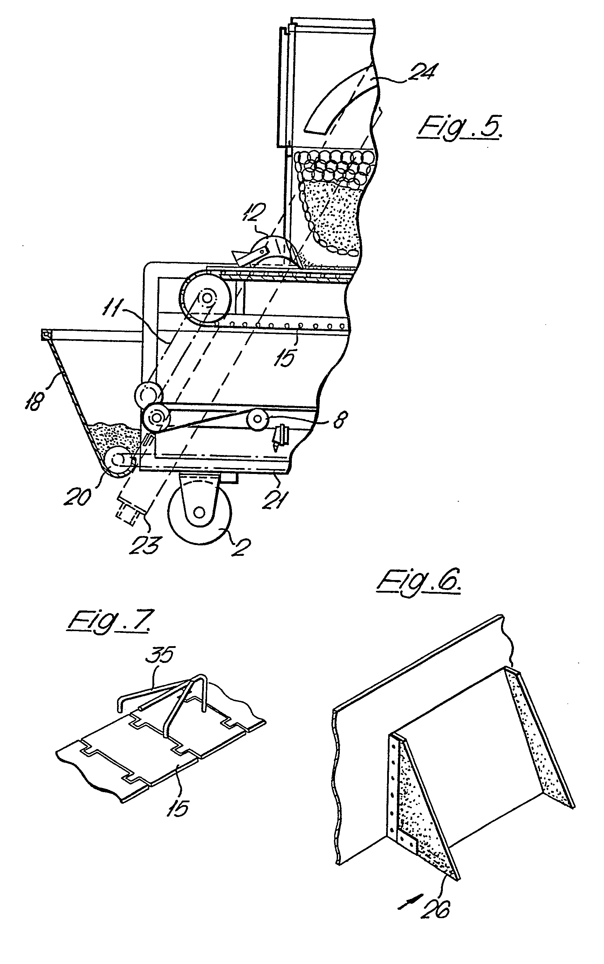

As can be clearly seen from the accompanying figures 2 and 7, said conveyor 15 is constituted by a plurality of small width slats pivoted together, their hinging pins emerging from both the longitudinal edges of the said salts, so that they become engaged by the end cog wheels 9.

It is apparent that said conveyor 15 does not necessarily have to be of the slat type, but can be of any other convenient type, for example of the endless belt or chain type.

Of the cog wheels 9, the drive wheel is disposed at the rear end of the machine and is keyed on to a shaft which is rotatably mounted on the frame 1.

On the said shaft there is keyed a sprocket wheel about which a chain 10 passes and extends downwards where it is deviated over a further sprocket wheel provided on the exit shaft of a variable speed motor 4, this latter being disposed at the base of the rear end of the frame 1.

A set of suitably equidistant shield-shaped pushers is fitted to the links of the conveyor 15.

Each of said shield-shaped pushers comprises a substantially hemispherical hollow shell 12, the mouth of which is slightly flared outwards and always faces the transfer direction of the conveyor 15.

To the inner edge of said mouth of each shield-shaped pusher there is connected the perimetral edge of an elastically deformable membrane 13, which is substantially of spherical cup configuration and is constituted of alimentary rubber.

At this point it should be stated that it is not necessary for each individual shield-shaped pusher to have a helmet configuration such as that heretofore described, but it is sufficient for its shape to be such as to completely cover the bare meat portion which encloses the bone of the hams 16.

Thus on the basis of the aforegoing, each shield-shaped pusher can be simply constituted by a convex plate slightly inclined in the transfer direction of the conveyor 15, and having its front or active surface covered with a convenient layer of elastically deformable alimentary rubber.

Said helmet or convex plate is pivoted centrally to an arm 14 which is hinged in its turn at the front point of its connection base to the conveyor 15.

As can be clearly seen in the accompanying Figure 1, the connection base of said arm 14 is relatively large so that it rests against the lower rectilinear portion of the conveyor 15 to enable the helmet or convex plate to assume its working position as shown.

Again with reference to the accompanying Figure 1, said large base acts as a support for the helmet or convex plate when this latter lies on the upper rectilinear portion of the conveyor 15.

Moreover, from said Figure 1 it can be seen that each individual arm 14 is slightly inclined in the transfer direction of the conveyor 15.

In addition, there is slight rotational slack between the arm 14 and the helmet or convex plate 12 in order to enable the helmet or convex plate 12 to be able to swing slightly relative to the arm 14.

From said conveyor 15 there branches a set of centering or positioning elements for the hams 16, and which are disposed between the helmets or convex plates 12.

One of these positioning or centering elements 35 is shown clearly in the accompanying Figure 7.

This latter shows that it is in the form of a retainer, the mouth of which is open towards the active face or surface of the corresponding helmet or convex plate 12.

The purpose of each retainer 35 is to house the shank of a ham 16.

Again with reference to Figure 7, said positioning or centering elements 35 are each essentially constituted by a piece of round bar which is bent at a right angle and is slightly inclined to the corresponding portion of conveyor 15, its bending angle facing this latter.

From the opposing side zones at the point of bending of said first round bar there branch two further round bars which open in the form of a book relative to the central round bar, their free ends, i.e. those ends which face the corresponding helmet or convex plate 12, being bent in a right angle towards the relative portion of conveyor 15.

The distance between the base of each retainer 35 and the respective convex plate 12 is such as to be able to contain all lengths of normal hams 16.

In addition, the transverse dimensions of each retainer 35 are such as to be able to receive ham legs of different sizes.

A horizontal conveyor belt 6 is provided between the lower rectilinear portion of the conveyor 15 and the base of the frame 1, and passes over two end rollers 7 which are disposed transversely to the frame 1.

In addition, the lower rectilinear portion of the conveyor belt 6 is deviated over two further rollers 8.

The upper rectilinear portion of the belt 8 moves in the opposite direction to that of the corresponding portion of the conveyor 15.

The motion for the belt 8 is derived from that of the front cog wheel 9 by way of a chain 11.

Again with reference to the accompanying Figure 1, it can be seen that on the inner face of the rear transverse wall of the frame 1 there is disposed a chute 5 for conveying on to the belt 6 the moist salt which falls from above.

In the same manner, as can be better seen in Figure 2, below the conveyor 15 and on the longitudinal walls of the frame 1 there are disposed two collection chutes 33 which are inclined towards the central zone of the upper rectilinear portion of the belt 6.

On the front transverse face of the frame 17 there is disposed a hopper 18 in which a quantity of moist salt 19 is constantly present.

The belt 6, below the front roller 7 of which there is provided a suitable scraper, leads to this hopper (Figure 1).

The base of the hopper 18 is constituted by a horizontal trough, in which there is housed a worm 20, to one end of which there is keyed a sprocket wheel.

A chain 21 passes around this latter and extends into the frame 1, where it is returned about a sprocket wheel keyed on to the exit shaft of a variable speed motor 3.

Along the trough containing the work 20, there is provided a suitable aperture which communicates with a tube-encased worm 23 inclined to the vertical and disposed to the side of the front zone of the machine.

The tube-encased worm 23 extends upwards to reach the top of the front zone of the framework 17.

On the upper end of the tube-encased worm 23 there is provided an electric motor 22 which by way of a suitable linkage rotates said tube-encased worm.

In addition, from the top of the tube, where the worm 23 is inserted, there branches a discharge conduit 24 for the moist salt, said discharge conduit 24 facing towards the lower part of the front end of the framework 17.

A channel is defined along the plate 34 by the lower zones of the sides of the frame 17, for transferring the hams 16 during the presalting stage, as better shown in the accompanying Figure 2.

As also shown in the accompanying Figure 6, along each of said sides of the frame 17 there is disposed a set of elastically flexible vertical flaps 26 suitably spaced apart and formed from alimentary rubber.

Each individual flap 26 is constituted by a sector of substantially trapezoidal shape, the oblique side of which faces the longitudinal central zone of said slide or transfer channel for the hams 16.

The vertical edge of each flap 26 which is disposed against the corresponding side of the frame 17 is conveniently fixed thereto, while to the rear of its lower horizontal side, this rear position relating to the transfer direction of the hams 16, there is provided a lamina or leaf spring, the purpose of which is to keep the corresponding flap 26 in its correct transverse vertical position when hams 16 are absent.

When hams are absent, the said transfer channel is practically completely occupied by a deformable perforated pocket 25 which is suspended upperly by its perimeter from the framework 17.

As is clearly visible in the accompanying Figure 1, a mass of moist salt 19 is always present inside the deformable perforated pocket 25.

The pocket 25 can be constructed of any suitable material, for example a natural fibre, and its apertures can have any configuration provided they allow the grains of moist salt to fall downwards when contact is made with the deformable pocket.

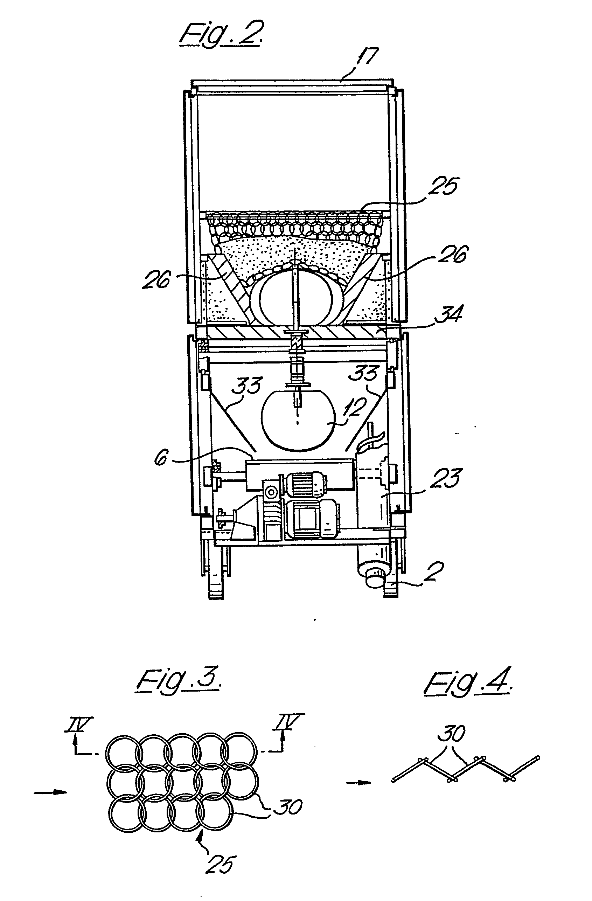

As can be better seen in the accompanying Figures 3 and 4, said deformable perforated pocket is preferably constituted by a plurality of circular steel rings 30 disposed in a matrix configuration comprising a plurality of rows and a plurality of columns.

The rings 30 of each row or column are coupled together, and these rings of said row or column are also coupled to the rings of the adjacent rows or columns, as can be better seen in Figure 3.

Furthermore, as can be clearly seen in the accompanying Figure 4 which represents a section through the pocket 25 in a direction parallel to the transfer direction of the hams 16, said coupling between the rings 30 which constitute the mesh or pocket 25 is carried out alternately so that transversely to the transfer channel for the hams 16, the pocket 25 constitutes a plurality of parallel ribs of triangular form which cause said section to assume a bellows-type configuration.

Finally, the rings 30 are mobile relative to each other in practically all directions.

The invention illustrated and described heretofore operates as follows.

During the operation of the machine, the conveyor 15 is driven continuously by the variable speed motor 4, and the tube-encased worm 23 discharges the moist salt 19 either continuously or intermittently, according to requirements, into the deformable perforated pocket 25. Said moist salt is obviously taken from the hopper 18.

Each time a retainer 35 emerges from below and a helmet or convex plate 12 is just about to emerge, the operator responsible for the loading places a ham 16 flat side downwards on the transfer plate 34 and inserts the shank of said ham 16 into the retainer 35.

After loading a ham, its rear portion, i.e. the bare meat which surrounds its bone, is completely covered or masked by the helmet or convex plate 12 which urges the ham 16 towards and below the deformable perforated pocket 25.

At this point it will be certainly apparent that the facility which each shield-shaped pusher 12 possesses for making small swinging movements relative to its arm 14 is extremely advantageous in that it enables the shield-shaped pusher 12 to adapt itself perfectly to the position and configuration of said meat portion which encloses the bone of a ham 16.

Furthermore, a great advantage of this particular type of pusher is due to the fact that during the presalting and rubbing stages, the meat which surrounds the bone in no way comes into contact with the moist salt 19.

In this respect, it is well known that during the presalting of the hams, said meat portion must not come into contact with the moist salt.

On the other hand, this latter has to adhere to the cut portion located at the end of the shank of each ham 16.

At this point it will be certainly apparent that the present machine attains the aforegoing objects.

In this respect, during their travel through the framework 17, the hams 16 come into contact with the perforated pocket 25 which, as it is deformable, practically completely encloses the entire upper surface of said hams 16.

The presence of the ribs on the pocket 25, these being shown in the accompanying Figure 4, and the presence of the grains of salt which constantly occupy its mesh apertures, enable the upper longitudinal fascia of the ham rind and the two upper-side longitudinal fascias of said rind to be correctly rubbed and presalted.

As is well known, in this manner the thin layer of fat which covers the rind of the hams 16 becomes cut into, so as to initiate the process of osmotic penetration of the saline solution into the meat.

Moreover, when the pocket 25 becomes contacted by the hams 16, part of the moist salt falls through the pocket meshes.

At this point it will be apparent that the moist salt 19 which falls comes to rest on the transfer plate 34, so that the lower longitudinal fascia of the rind of the hams 16 also becomes presalted and rubbed.

In addition, said moist salt falling from above piles up in the compartments defined between each pair of elastic flaps 26 which carry out the presalting and rubbing of the lowerside longitudinal fascias of the rind of the hams 16.

In this manner, the rind of each ham 16 becomes completely and correctly presalted and rubbed, and the falling moist salt 19 also makes contact with the cut portion of the shank of the hams 16.

In this respect, as will be apparent, the moist salt also makes contact with the cut portion of the ham shanks because the retainers or positioning elements 35 are open at their front and constantly move or urge against the deformable perforated pocket 25 so as to cause moist salt to fall and adhere to said cut portions.

In contrast, as stated, because of the presence of the shield-shaped pushers 12 the bare meat part which encloses the bone of each ham 16 in no way comes into contact with the moist salt 19.

The machine according to the invention prevents the moist salt from coming into contact with said bare meat for the following reasons.

Firstly, moist salt cannot fall into the membranes 13 when the shield-shaped pushers 12 are on the lower rectilinear portion of the conveyor 15 because the salt falling from the pocket 25 is completely recovered from the transfer plate 34.

Consequently, the active face of the shield-shaped pushers reaches the loading zone of the machine completely free from salt.

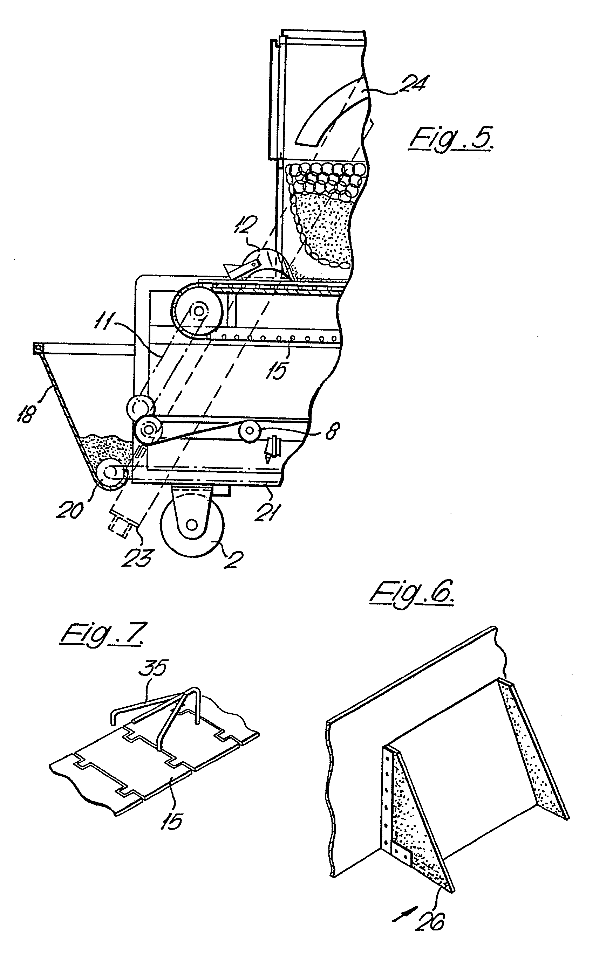

When a shield-shaped pusher 12 is in said loading position and if for any reason a ham is not loaded on to the transfer plate 34, because of the particular inclination and hinging of the arm 14, this latter swivels by gravity in the transfer direction so that the shield-shaped pusher 12 becomes disposed with its active face facing the transfer plate 34 as clearly shown in the accompanying Figure 5.

Consequently, even after passing through the framework 17, an empty shield-shaped pusher 12 receives absolutely no moist salt 19 on its active surface.

After the corresponding presalting and rubbing stage, each ham 16 is discharged from the machine, and the salt which is entrained by said ham falls on to the conveyor belt 6 and is conveyed into the hopper 18.

The aforesaid operating stages proceed in the same manner for each ham 16 to be presalted and rubbed.

Finally, after the hams 16 have passed through the machine according to the invention, there are subjected to a normal salting operation carried out in known manner.

The invention is not limited to the single embodiment described heretofore, and modifications and improvements can be made thereto without leaving the scope of the inventive idea, the fundamental characteristics of which are summarised in the following claims.

**Claims:**

1. A presalting and rubbing machine for raw hams in general, characterised by comprising, on a suitable frame, a horizontally positioned transversely deformable tunnel with its inner walls constantly strewn with moist salt, the hams being laid on its base flat side down and with their shanks facing the exit mouth of the tunnel; members for urging the hams along said tunnel and arranged to completely enclose the meat which surrounds the bone of these latter, said members branching from a conveyor which is disposed immediately below the central longitudinal zone of the tunnel; positioning members branching from said conveyor for receiving the ham shanks; means disposed below the conveyor for recovering the moist salt falling from the tunnel; a buffer store for the moist salt to which said recovery means lead; and means for conveying moist salt from said buffer store to the front zone of the upper part of said deformable tunnel.

2. A machine as claimed in claim 1, characterised in that said transversely deformable tunnel is essentially constituted by a horizontal channel which when hams are absent is practically completely occupied by a perforated pocket which is upperly suspended from a suitable support and contains a mass of moist salt, said pocket being provided with apertures arranged to allow the salt grains to fall and comprising ribs disposed close together and extending transversely to the transfer direction of the hams; from each side wall of said horizontal channel there branching a set of elastically deformable orthogonal flaps suitably spaced apart and constituted of alimentary rubber, to the rear of each of these latter there being provided at least one leaf spring for its return into correct operating position.

3. A machine as claimed in claim 2, characterised in that said perforated pocket is essentially constituted by a metal mesh, of which the links, of annular shape are coupled together in alternate directions.

4. A machine as claimed in claim 1, characterised in that each of said ham pusher members is in the form of a convex plate provided at its front with an elastically deformable layer of alimentary rubber, and is connected at its rear, in such a manner that it can swing slightly in the vertical plane in which the corresponding conveyor lies, to the end of an arm which is hinged to the conveyor; said arm being suitably inclined in the transfer direction of the conveyor such that each convex plate automatically lies with its active surface on the base of the horizontal channel when the relative ham is missing from said base.

5. A machine as claimed in claim 1, characterised in that said positioning members comprise a set of retainers of flared shape which are disposed between said convex plates, towards the active surfaces of which there face the retainer mouths into which the shanks are inserted.

6. A machine as claimed in claim 1, characterised in that said means for recovering the moist salt falling from the tunnel are in the form of conveyor belt, the motion of which is derived from the ham transfer conveyor, this latter being driven by a suitable motor unit, a convenient transverse scraper being provided at the discharge zone of said conveyor belt.

7. A machine as claimed in claim 1, characterised in that said buffer store unit is constituted by a hopper disposed at the front end of the machine frame, and at the base of which there is provided a trough which houses a suitably driven worm.

8. A machine as claimed in claim 1, characterised in that said means for conveying moist salt to the top of the tunnel comprise an independently driven tube-encased worm inclined to the horizontal and provided upperly with a discharge conduit to the front zone of said perforated pocket, said tube-encased worm communicating through a suitable aperture with that zone of said hopper in which said base worm is provided.

**Patentansprüche:**

1. Vorrichtung zum Salzen und Reiben von rohen Schinken im allgemeinen gekennzeichnet durch einen auf einem geeigneten Rahmen horizontal angeordneten in Querrichtung verformbaren Tunnel, dessen inneren Wände konstant mit feuchtem Salz bestreut sind, wobei die Schinken auf die flache Grundseite mit ihren Beinen in Richtung zur Ausgangsöffnung des Tunnels weisend gelegt sind; Glieder, die die Schinken durch den Tunnel transportieren und die so angeordnet sind, daß sie vollständig das Fleisch, das das Bein umgibt, umschließen, wobei die Glieder von einem Förderband abzweigen, das direkt unter dem zentralen Längsbereich des tunnels angeordnet ist; Positionierglieder, die von dem Förderband zum Aufnehmen der Schinkenbeine abzweigen; eine unter dem Förderband angeordnete Einrichtung zur Rückgewinnung des aus dem Tunnel fallenden feuchten Salzes; einen Pufferspeicher für das feuchte Salz zu dem die Rückgewinnungseinrichtung führt; und eine Einrichtung zum Transport des feuchten Salzen von dem Pufferspeicher zu dem Vorderbereich des oberen Teiles des verformbaren Tunnels.

2. Vorrichtung nach Anspruch 1 dadurch gekennzeichnet, daß das in Querrichtung verformbare Tunnel im wesentlichen durch einen horizontalen Kanal gebildet ist, der in Abwesenheit von Schinken praktisch vollständig von einer perforierten Tasche ausgefüllt ist, die oberhalb in einer geeigneten Lagerung aufgehängt ist und einen Salzvorrat enthält, wobei die Tasche mit Öffnungen zum Durchtritt der Salzkörner versehen ist und dicht nebeneinander angeordnete Streben aufweist, welche sich quer zur Transportrichtung de Schinken erstrecken, und daß von jeder Seitenwand des horizontalen Kanales aus ein Satz elastisch verformbarer orthogonaler Klappen abzweigen, die geeigneter Weise auf Abstand zueinander liegen und aus nahrungsmittelgerechtem Gummi bestehen, wobei an jede ihrer Rückseiten wenigstens eine Blattfeder zur Rückkehr in die korrekte Operationslage angeordnet ist.

3. Vorrichtung nach Anspruch 2 dadurch gekennzeichnet, daß die perforierte Tasche im wesentlichen aus einem Metallgitter gebildet ist, dessen ringförmige Glieder in versetzten Richtungen miteinander verbunden sind.

4. Vorrichtung nach Anspruch 1 dadurch gekennzeichnet, daß die Schinkentransportglieder jeweils eine konvex gebogene Platte mit einer elastisch verformbaren Schicht aus nahrungsmittelgerechtem Gummi auf seiner Vorderseite aufweist, wobei jedes Glied an seinem hinteren Ende so befestigt ist, daß es leicht in der vertikalen Ebene, in der das korrespondierende Förderband liegt, schwingen kann und zwar um das Ende eines Armes, der an dem Förderband angelenkt ist, wobei der Arm in entsprechender Weise in die Transportrichtung des Förderbandes so geneigt ist, daß jede konvexe Platte automatisch mit ihrer wirksamen Oberfläche auf der Grundfläche des horizontalen Kanales liegt, wenn sich kein entsprechender Schinken auf der Grundfläche befindet.

5. Vorrichtung nach Anspruch 1 dadurch gekennzeichnet, daß die Positionierglieder einen Satz nach außben sich erweiternden Haltebügel aufweist, die zwischen den konvexen Platten gegen deren wirksamen Flächen gerichtet sind, wobei in die Öffnungen der Haltebügel die Beine eingefügt werden.

6. Vorrichtung nach Anspruch 1 dadurch gekennzeichnet, daß die Einrichtung zur Rückgewinnung des durch den Tunnel gefallenen feuchten Salzes ein Förderband aufweist, dessen Antrieb von dem Antrieb des Transportbandes für den Schinken abgezweigt ist, wobei der letztere durch einen geeigneten Motor angetrieben ist, wobei ein geeigneter Querschaber am Ausgang des Förderbandes angeordnet ist.

7. Vorrichtung nach Anspruch 1 dadurch gekennzeichnet, daß der Pufferspeicher durch einen am vorderen Ende des Maschinengestelles angeordneten Behälter gebildet ist, wobei dessen Basis mit einer Rinne versehen ist, in die eine angetriebene Schnecke ragt.

8. Vorrichtung nach Anspruch 1 dadurch gekennzeichnet, daß die Übertragungseinrichtung für das feuchte Salz zur Oberseite des Tunnels eine unabhangig angetriebene röhrenummantelte Schnecke aufweist, die gegen die Horizontale geneigt ist und mit einer oberen Auslaßöffnung zum vorderen Bereich der perforierten Tasche versehen ist, wobei die röhrenummantelnde Schnecke durch eine geeignete Öffnung mit dem Bereich des Behälters in Verbindung steht, in der die andere Schnecke angeordnet ist.

**Revendications**

1. Une machine à présaler et frotter les jambons crus en général, caractérisée en ce qu'elle comprend, sur un châssis approprié, un tunnel transversalement déformable positionné horizontalement avec ses parois internes constamment couvertes de sel fondu, les jambons étant posés avec leur côté de base plat en dessous et avec leur manche faisant face à l'embouchure de sortie du tunnel; des organes pour presser les jambons le long dudit tunnel et disposés de façon à enfermer complètement la viande qui entoure l'os de ces derniers, lesdits organes étant issus d'un convoyeur qui est disposé immédiatement en dessous de la zone centrale longitudinale du tunnel; des organes des positionnement issus dudit convoyeur pour recevoir les manches de jambon; des moyens disposés en dessous du convoyeur pour récupérer le sel fondu tombant du tunnel; un magasin tampon pour le sel fondu auquel conduisent lesdits moyens de récupération; et des moyens pour convoyer le sel fondu provenant dudit magasin tampon jusque dans la zone avant de la partie supérieure dudit tunnel déformable.

2. Une machine selon la revendication 1, caractérisée en ce que ledit tunnel transversalement déformable est essentiellement constitué par un canal horizontal qui, lorsque les jambons sont absents, est pratiquement complètement occupé par une poche perforée qui est suspendue par en dessus à un support approprié et contient une masse de sel fondu, ladite poche étant pourvue d'overtures disposées de façon à permettre aux grains de sel de tomber et comprenant des nervures disposées étroitement les unes contre les autres et s'étendant transversalement à la direction de déplacement des jambons; à partir de chaque paroi latérale dudit canal horizontal sont issus un jeu de volets orthogonaux élastiquement déformables espacés de façon appropriée les uns des autres et constitués an caoutchouc alimentaire et à l'arrière de chacun de ces derniers est prévue au moins une lame de ressort pour son rappel dans la position correcte de fonctionnement.

3. Une machine selon la revendication 2, caractérisée en ce que ladite poche perforée est essentiellement constituée par . un filet métallique dont les mailles, de forme annulaire, sont couplées ensemble dans des directions alternées.

4. Une machine selon la revendication 1, caractérisée en ce que chacum desdits organes pousseurs de jambon a la forme d'une plaque convexe pourvue sur sa face avant d'une couche élastiquement déformable de caoutchouc alimentaire, et il est relié à sa partie arrière, de telle façon qu'il peut tourner légèrement dans le plan vertical dans lequel se trouve le convoyeur correspondant à l'extrémité d'un bras qui est articulé sur le convoyeur; ledit bras étant incliné de façon appropriée dans le direction de déplacement du convoyeur de sorte que chaque plaque convexe automatiquement s'oriente avec sa surface active sur la base du canal horizontal lorsque le jambon correspondant est absent de cet endroit.

5. Une machine selon la revendication 1, caractérisée en ce que lesdits organes de positionnement comprennent un jeu d'organes de retenue de forme évasée qui sont disposés entre lesdites plaques convexes, en direction des surfaces actives qui font face aux embouchures des organes de retenue dans lesquels les manches sont introduits.

6. Une machine selon la revendication 1, caractérisée en ce que lesdits moyens pour récupérer le sel fondu tombant du tunnel se présentent sous la forme d'un convoyeur à bande, dont le mouvement est dérivé du convoyeur de déplacement, des jambons, ce dernier étant entraîné par un groupe moteur approprié, un râcleur transversal approprié étant prévu dans le région de déchargement dudit convoyeur à bande.

7. Une machine selon la revendication 1, caractérisée en ce que l'unité de magasin tampon est constituée par une trémie disposée à l'extrémité avant du châssis de la machine, et à la base de laquelle est prévue une auge qui contient une vis sans fin convenablement entraînée.

8. Une machine selon la revendication 1, caractérisée en ce que lesdits moyens pour convoyer le sel fondu au sommet du tunnel comprennent une vis sans fin logée dans un tube entraînée indépendamment inclinée par rapport à l'horizontale et pourvue à son extrémité supérieure, avec un conduit de décharge en direction de la zone avant de ladite poche perforée, ladite vis sans fin logée dans son tube comuniquant par une ouverture appropriée avec cette région de ladite trémie dans laquelle la base de ladite vis est prévue.

_Fig.1._

0 052 895

_Fig .2._

_Fig.3._

_Fig.4._

2

0 052 895

*Fig.5.*

*Fig.6.*

*Fig.7.*

3

0 052 895

Fig.5.

Fig.6.

Fig.7.

3